# EUROPEAN PATENT SPECIFICATION

(11) **EP 4 471 410 B1**
(45) Date of publication and mention of the grant of the patent: **11.11.2026**
(21) Application number: 22948594.1
(22) Date of filing: 30.06.2022
(51) Int. Cl.: G01N 21/84, H01M 10/04, H01M 50/16

(54) **DETECTION METHOD AND SYSTEM FOR BATTERY PRODUCTION, AND BATTERY PRODUCTION METHOD AND SYSTEM**
DETEKTIONSVERFAHREN UND -SYSTEM ZUR BATTERIEHERSTELLUNG SOWIE BATTERIEHERSTELLUNGSVERFAHREN UND -SYSTEM
PROCÉDÉ ET SYSTÈME DE DÉTECTION POUR LA PRODUCTION DE BATTERIES, ET PROCÉDÉ ET SYSTÈME DE PRODUCTION DE BATTERIES

(43) Date of publication of application: 04.12.2024
(73) Proprietor: Contemporary Amperex Technology (Hong Kong) Limited, Hong Kong (HK)
(72) Inventor: TU, Yinhang, Ningde, Fujian 352100 (CN); CUI, Kunpeng, Ningde, Fujian 352100 (CN); LIU, Yi, Ningde, Fujian 352100 (CN)
(74) Representative: Gong, Jinping
(86) International application number: PCT/CN2022/103069
(87) International publication number: WO 2024/000491

(56) References cited:
- CN-A- 107 658 492
- CN-A- 109 239 069
- CN-A- 114 136 981
- CN-A- 114 136 981
- US-A1- 2015 132 621

## Description

### TECHNICAL FIELD

This application relates to the field of battery technologies, and in particular, to a detection method and detection system as specified in the appended claim set for battery production, a production method and production system for battery, an electronic device, a non-transient computer-readable storage medium, and a computer program product.

### BACKGROUND

With the rapid development of clean energy, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

At present, during production of traction batteries, after manufactured and before assembled in a housing, a cell of a battery is typically coated with a film having good flexibility, allowing for an electrical isolation between the cell and the housing and preventing the cell from being damaged by the hard housing. However, the coating quality of the film can directly affect the quality of the produced batteries.

CN 114 136 981 A describes a method for checking the quality of a coating film in a lithium battery, wherein images of the large surface, the side surface and the bottom surface of the lithium battery are taken. Evaluating these images it is determined whether the film wrapped on the large surface of the lithium battery is misplaced, whether the distance from the top cover is too small, whether the welding points are poorly welded, and whether the film wrapped on the side and bottom surfaces of the lithium battery is not firmly glued

### SUMMARY

This application is intended to resolve at least one of the foregoing technical problems in the prior art. In view of this, an objective of this application is to propose a detection method and detection system as specified in the appended claim set for battery production, a production method and production system for battery, an electronic device, a non-transient computer-readable storage medium, and a computer program product, so as to improve the quality of batteries.

According to a first aspect, the application provides a detection method for battery production, where the battery includes a cell and an end cover. The detection method includes: obtaining a detection image including the cell coated with a film and the end cover, where the cell coated with the film is fixedly connected to the end cover; obtaining a gap value between an edge of the film and the end cover based on the detection image; determining whether the gap value between the edge of the film and the end cover meets a preset standard; in response to the gap value not meeting the preset standard, adjusting a gap between the edge of the film and the end cover; and detecting whether the adjusted gap value between the edge of the adjusted film and the end cover meets the preset standard.

In the technical solution of this application, detecting the gap value between the edge of the film and an edge of the end cover can avoid the problem of battery quality deterioration caused by dislocation of the film. In addition, the detection method has high accuracy and efficiency, which is beneficial to automation in a production process.

Adjusting products with unqualified coating of the film can increase the probability that products with defective coating of the film are changed into good products, thereby increasing the total product yield of batteries and avoiding the unnecessary waste.

In some embodiments, the cell includes a top surface, a bottom surface, a first side surface, and a second side surface, where the top surface is close to the end cover and opposite the end cover, and the first side surface and the second side surface are adjacent to each other and are located between the top surface and the bottom surface. The detection image includes a first detection image and a second detection image, where the first detection image includes the first side surface of the cell, and the second detection image includes the second side surface of the cell. The determining, based on the detection image, whether the gap value between the edge of the film and the end cover meets a preset standard includes: in response to determining, based on the first detection image, that the gap value between the edge of the film and the end cover meets the preset standard and determining, based on the second detection image, that the gap value between the edge of the film and the end cover meets the preset standard, determining that the gap value between the edge of the film and the end cover meets the preset standard.

Detecting the gap value between the edge of the film and an edge of the top cover in multiple directions can determine the coating quality of the film of the cell more accurately, ensuring the product yield.

In some embodiments, the determining, based on the detection image, whether the gap value between the edge of the film and the end cover meets a preset standard includes: detecting, from the detection image, a first edge line of the end cover and a second edge line of the film close to the first edge line; and in response to the second edge line having not been detected in the detection image, determining that the gap value between the edge of the film and the end cover does not meet the preset standard.

The edge line of the film having not been detected is determined as the gap value not meeting the standard, allowing for timely removal of the cell with the film damaged or missing and ensuring the product yield.

In some embodiments, the determining, based on the detection image, whether the gap value between the edge of the film and the end cover meets a preset standard further includes: in response to the first edge line of the end cover and the second edge line of the film close to the first edge line having been identified, obtaining a distance from at least one point on the first edge line to the second edge line in a preset direction, and taking the distance as the gap value, where the preset direction is perpendicular to a surface of the end cover close to the cell; and determining, based on at least one gap value corresponding to the at least one point, whether the gap value between the edge of the film and the end cover meets the preset standard.

Detecting whether the gap value is qualified at multiple detection sites can determine the coating quality of the film more accurately, ensuring the product yield.

In some embodiments, the determining, based on at least one gap value corresponding to the at least one point, whether the gap value between the edge of the film and the end cover meets the preset standard includes: in response to the at least one gap value corresponding to the at least one point being within a preset range, determining that the gap value between the edge of the film and the end cover meets the preset standard.

Setting a strict detection standard for detecting the gap value helps to control the coating quality of the film and increase the product yield.

In some embodiments, the at least one point includes at least one equal diversion point on the first edge line.

The equal diversion point on the first edge line typically corresponds to a hot melting site of the film and the end cover. Detecting a gap value at the equal diversion point can avoid battery scrap caused by the issues such as hot-melting explosion points formed in subsequent hot melting treatment on the film and the end cover.

In some embodiments, the adjusting a gap between the edge of the film and the end cover includes: adjusting a coating position of the film on the cell based on the gap value and a standard gap value between the edge of the film and the end cover.

The above adjustment allows the film at a position where good hot melting can be formed, thereby increasing the product yield.

According to a second aspect, the application provides a detection system for battery production, where the battery includes a cell and an end cover. The detection system includes a detection apparatus, where the detection apparatus includes: a shooting unit, configured to shoot a detection image including the cell coated with a film and the end cover, where the cell coated with the film is fixedly connected to the end cover; an obtaining unit, configured to obtain a gap value between an edge of the film and the end cover based on the detection image; a processing unit, configured to determine whether the gap value between the edge of the film and the end cover meets a preset standard; an adjusting apparatus in communication connection with the detection apparatus and configured to: in response to the gap value not meeting the preset standard, adjust a gap between the edge of the film and the end cover. The detection apparatus is further configured to detect whether the adjusted gap value between the edge of the adjusted film and the end cover meets the preset standard.

In embodiments of the present invention, the cell includes a top surface, a bottom surface, a first side surface, and a second side surface, where the top surface is close to the end cover and opposite the end cover, and the first side surface and the second side surface are adjacent to each other and are located between the top surface and the bottom surface. The detection image includes a first detection image and a second detection image, where the first detection image includes the first side surface of the cell, and the second detection image includes the second side surface of the cell. The processing unit is further configured to: in response to determining, based on the first detection image, that the gap value between the edge of the film and the end cover meets the preset standard and determining, based on the second detection image, that the gap value between the edge of the film and the end cover meets the preset standard, determine that the gap value between the edge of the film and the end cover meets the preset standard.

In embodiments of the present invention, the detection system further includes: a detection unit, configured to: detect, from the detection image, a first edge line of the end cover and a second edge line of the film close to the first edge line; and in response to the second edge line having not been detected in the detection image, determine that the gap value between the edge of the film and the end cover does not meet the preset standard.

In embodiments of the present invention, the processing unit is further configured to: in response to the first edge line of the end cover and the second edge line of the film close to the first edge line having been identified, obtain a distance from at least one point on the first edge line to the second edge line in a preset direction, and take the distance as the gap value, where the preset direction is perpendicular to a surface of the end cover close to the cell; and determine, based on at least one gap value corresponding to the at least one point, whether the gap value between the edge of the film and the end cover meets the preset standard.

In some embodiments, the processing unit is further configured to: in response to the at least one gap value corresponding to the at least one point being within a preset range, determine that the gap value between the edge of the film and the end cover meets the preset standard.

In some embodiments, the detection apparatus includes a plurality of shooting units.

In some embodiments, the shooting unit is a CCD camera.

In some embodiments, the adjusting apparatus is further configured to adjust a coating position of the film on the cell based on the gap value and a standard gap value between the edge of the film and the end cover.

According to a third aspect, the application provides a production method for battery. The production method includes: determining, using the detection method according to any one of the embodiments of this application, whether a gap value between an edge of a film applied on a cell and an end cover meets a preset standard; and in response to determining that the gap value between the edge of the film and the end cover meets the preset standard, performing hot melting treatment on the film and the end cover.

In the technical solution of this embodiment of this application, detecting the gap value between the edge of the film and an edge of the end cover before hot melting treatment can avoid the problem of battery quality deterioration caused by dislocation of the film. In addition, the hot melting treatment is not performed on products with defective film coating, thereby improving the battery production efficiency and reducing the costs.

In embodiments of the present invention, when adjusting a gap between the edge of the film and the end cover in response to the gap value not meeting the preset standard, the production method further includes: in response to the adjusted gap value between the edge of the adjusted film and the end cover meeting the preset standard, performing hot melting treatment on the adjusted film and the end cover.

Adjusting products with unqualified coating of the film can increase the probability that products with defective coating of the film are changed into good products, thereby increasing the total product yield of batteries and avoiding the unnecessary waste.

In embodiments of the present invention, the production method further includes: in response to the adjusted gap value not meeting the preset standard, removing the cell coated with the film and the end cover from a production line.

Film-coated products which do not meet the standard are removed from the production line in a timely manner and are not subjected to subsequent treatments such as hot melting, which can improve the product yield and the production efficiency.

According to a fourth aspect, the application provides a production system for battery. The production system includes: the detection system according to any one of the embodiments of this application, configured to determine whether a gap value between an edge of a film applied on a cell and an end cover meets a preset standard; and a hot melting apparatus in communication connection with a detection apparatus and configured to: in response to determining that the gap value between the edge of the film and the end cover meets the preset standard, perform hot melting treatment on the film and the end cover.

In embodiments of the present invention, when the detection system includes an adjusting apparatus, the hot melting apparatus is further configured to: in response to the adjusted gap value between the edge of the adjusted film and the end cover meeting the preset standard, perform hot melting treatment on the adjusted film and the end cover.

In embodiments of the present invention, the production system further includes a conveying apparatus in communication connection with the detection apparatus and configured to: in response to the adjusted gap value not meeting the preset standard, remove the cell coated with the film and the end cover from a production line.

According to a fifth aspect, the application provides an electronic device. The electronic device includes: at least one processor; and a memory in communication connection with the at least one processor, where a computer program is stored in the memory, and when the computer program is executed by the at least one processor, the detection method and the production method according to the foregoing embodiments are implemented.

According to a non-claimed aspect, the application provides a system for battery, where the system includes the electronic device according to the foregoing embodiment.

According to a non-claimed aspect, the application provides a non-transient computer-readable storage medium, where a computer program is stored in the non-transient computer-readable storage medium, and when the computer program is executed by a processor, the detection method and the production method according to the foregoing embodiments are implemented.

According to an non-claimed aspect, the application provides a computer program product including a computer program, where when the computer program is executed by a processor, the detection method and the production method according to the foregoing embodiments are implemented.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application.
FIG. 1 is a schematic structural exploded view of a battery cell according to some non-claimed embodiments of this application;
FIG. 2 is a flowchart of a detection method for battery production according to some non-claimed embodiments of this application;
FIG. 3 is a schematic diagram showing structures of a cell and an end cover according to some non-claimed embodiments of this application;
FIG. 4 is a flowchart of a detection method for battery production according to some embodiments of this application;
FIG. 5 is an enlarged view of zone A in FIG. 3;
FIG. 6 is a schematic block diagram of a detection system for battery production according to some embodiments of this application;
FIG. 7 is a schematic structural diagram of an adjusting apparatus according to some embodiments of this application;
FIG. 8 is a schematic structural diagram of a shooting unit according to some embodiments of this application;
FIG. 9 is a schematic block diagram of a production system for battery according to some embodiments of this application;
FIG. 10 is a flowchart of a detection method for battery production according to some embodiments of this application; and
FIG. 11 is a flowchart of a production method for battery according to some embodiments of this application.

### Description of reference signs:

battery cell 100; end cover 110; housing 120; cell 130; film 140;
electrode terminal 111; opening 121; tab 131; top surface 130A; bottom surface 130B; first side surface 130C; second side surface 130D; zone A; first edge line 110A; second edge line 140A;
detection system 600; detection apparatus 610; adjusting apparatus 620; shooting unit 611; obtaining unit 612; processing unit 613; detection unit 614;
production system 900; hot melting apparatus 910; and conveying apparatus 920.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application. The drawings schematically illustrate only parts related to the technical solutions of this application and do not represent their actual structure as products.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements.

With the rapid development of clean energy, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

At present, during production of traction batteries, after manufactured and before assembled in a housing, a cell of a battery is typically coated with a film having good flexibility, allowing for an electrical isolation between the cell and the housing and preventing the cell from being damaged by the hard housing.

This applicant has noted that due to light weight, softness, static-prone feature, and the like, a film applied on a cell is not easy to locate but prone to damage during application, so a deviation in a coating position of the film, partial or complete absence of the film at such position, and the like often occur. However, the coating quality of the film can directly affect the quality of the produced batteries. For example, under some circumstances, after a cell is coated with a film, the film and an end cover of a battery housing will be directly subjected to hot melting treatment. However, for example, when there is a deviation in the coating position of the film, it may lead to problems such as poor hot melting, film damage caused by contact of a hot melting head of a hot melting device with the coating film, and formation of hot-melting explosion points.

To alleviate the problem of battery quality deterioration caused by poor film coating, the applicant has found through research that a step of testing a film coating position can be added to a production process, and the treatment such as hot melting of the film and the end cover is only performed on products passing the test.

Such method can avoid battery deterioration caused by dislocation of the coating film. In addition, the hot melting treatment is not performed on products with defective film coating, thereby improving the battery production efficiency and reducing the costs.

A production method and production system for battery cell according to embodiments of this application may be used for, but is not limited to, production of secondary batteries, primary batteries, lithium-sulfur batteries, sodium-ion batteries, or magnesium-ion batteries. A battery may include a box and a battery cell, where one or more battery cells may be accommodated in the box.

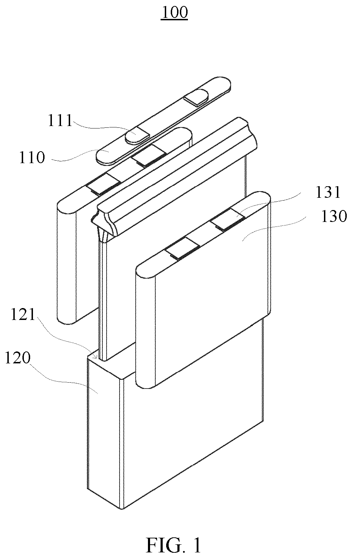

Referring to FIG. 1, FIG. 1 is a schematic structural exploded view of a battery cell 100 according to some non-claimed embodiments of this application. The battery cell 100 refers to a smallest unit constituting a battery. As shown in FIG. 1, the battery cell 100 includes an end cover 110, a housing 120, a cell 130, and other functional components.

The end cover 110 refers to a component that covers an opening 121 of the housing 120 to isolate an internal environment of the battery cell 100 from an external environment. Without limitation, a shape of the end cover 110 may fit with that of the housing 120, such that the end cover 110 can match the housing 120. Optionally, the end cover 110 may be made of a material with certain hardness and strength (for example, aluminum alloy), so that the end cover 110 is less likely to deform when subjected to extrusion and collision, allowing the battery cell 100 to have higher structural strength and enhanced safety performance. The end cover 110 may be provided with functional components such as an electrode terminal 111. The electrode terminal 111 may be configured to electrically connect to the cell 130 for outputting or inputting electrical energy of the battery cell 100. In some embodiments, the end cover 110 may further be provided with a pressure relief mechanism configured to relieve internal pressure when the internal pressure or temperature of the battery cell 100 reaches a threshold. The end cover 110 may also be made of various materials, such as copper, iron, aluminum, stainless steel, aluminum alloy, and plastic. This is not particularly limited in the embodiments of this application. In some embodiments, an insulator may also be disposed on an inner side of the end cover 110. The insulator may be configured to isolate an electrically connected component in the housing 120 from the end cover 110 to reduce the risk of short circuit. For example, the insulator may be made of plastic, rubber, or the like.

The housing 120 is an assembly configured to form an internal environment of the battery cell 100 together with the end cover 110, where the formed internal environment may be configured to accommodate the cell 130, an electrolyte, and other components. The housing 120 and the end cover 110 may be independent components, an opening 121 may be provided in the housing 120, and the end cover 110 covers the opening 121 to form the internal environment of the battery cell 100. Without limitation, the end cover 110 and the housing 120 may alternatively be integrated. Specifically, the end cover 110 and the housing 120 may form a shared connection surface before other components are placed inside the housing, and then the end cover 110 covers the housing 120 when inside of the housing 120 needs to be enclosed. The housing 120 may be of various shapes and sizes, such as a cuboid shape, a cylindrical shape, and a hexagonal prism shape. Specifically, a shape of the housing 120 may be determined according to a specific shape and size of the cell 130. The housing 120 may be made of various materials, such as copper, iron, aluminum, stainless steel, aluminum alloy, and plastic. This is not particularly limited in the embodiments of this application.

The cell 130 is a component in which electrochemical reactions take place in the battery cell 100. The housing 120 may include one or more cells 130. The cell 130 is mainly formed by winding or stacking a positive electrode plate and a negative electrode plate, and a separator is typically disposed between the positive electrode plate and the negative electrode plate. Parts of the positive electrode plate and the negative electrode plate with active substances constitute a body portion of the cell, while parts of the positive electrode plate and the negative electrode plate without active substances each constitute a tab 131. A positive electrode tab and a negative electrode tab may both be located at one end of the body portion or be located at both ends of the body portion respectively. During charge and discharge of the battery, a positive electrode active substance and a negative electrode active substance react with an electrolyte, and the tabs 131 are connected to the electrode terminals to form a current loop.

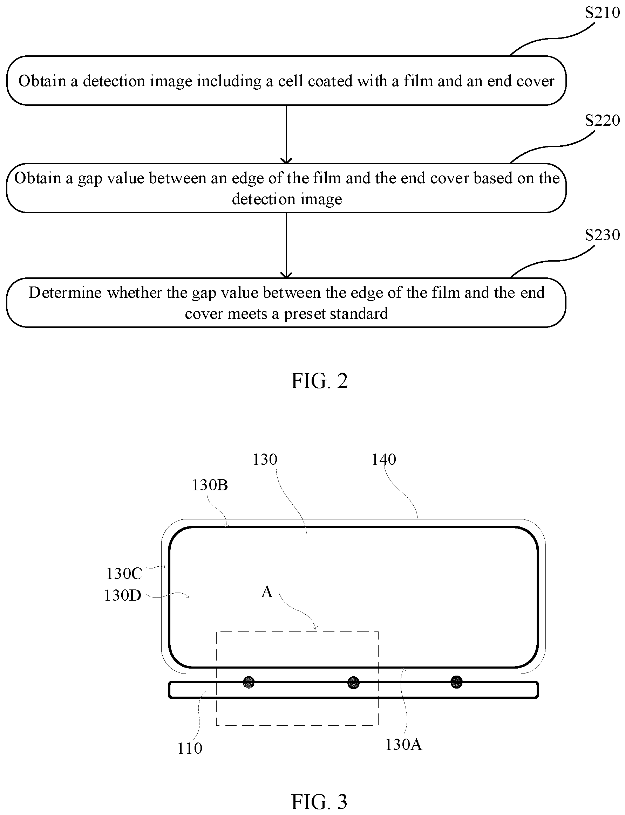

FIG. 2 is a flowchart of a detection method for battery production according to some non-claimed embodiments of this application. FIG. 3 is a schematic diagram showing structures of a cell 130 and an end cover 110 according to some non-claimed embodiments of this application. Referring to FIGs. 1 to 3, some embodiments of this application provide a detection method for battery production, where the battery includes a cell 130 and an end cover 110. The detection method includes the following steps. Step S210: Obtain a detection image including the cell 130 coated with a film 140 and the end cover 110, where the cell 130 coated with the film is fixedly connected to the end cover 110. Step S220: Obtain a gap value between an edge of the film 140 and the end cover 110 based on the detection image. Step S230: Determine whether the gap value between the edge of the film 140 and the end cover 110 meets a preset standard.

In some embodiments, the end cover 110 is fixedly connected to the cell 130 through a connecting piece. The cell 130 includes a top surface 130A and a bottom surface 130B opposite each other, and a plurality of side surfaces 130C located between the top surface 130A and the bottom surface 130B. One of the top surface 130A and the bottom surface 130B (for example, 130A) is close to the end cover 110 and opposite the end cover 110. The film 140 is at least partially applied to the plurality of side surfaces 130C of the cell 130 and the bottom surface 130B away from the end cover 110. Ideally, the film 140 protrudes from the top surface 130A along a direction approaching the end cover 110 and is used to be hot melted with the end cover 110. Actually, due to light weight, softness, static-prone feature, and the like of the film 140, the film 140 may not protrude from the top surface 130A along the direction approaching the end cover 110. Detecting whether the gap value between the edge of the film 140 and the end cover 110 meets a preset standard means detecting a gap value between an edge of the film 140 close to the end cover 110 and the end cover 110. The preset standard may be set based on production requirements for different types of batteries, which is not limited in this application. The end cover 110 may include lower plastic. Hot melting the film 140 and the end cover 110 may mean hot melting the film 140 and the lower plastic of the end cover 110. The detection image may be an image shot facing one of the plurality of side surfaces 130C of the cell 130, such that the detection image includes a gap between the edge of the film 140 and the end cover 110.

In the embodiments of this application, detecting the gap value between the edge of the film 140 and an edge of the end cover 110 can avoid the problem of battery quality deterioration caused by dislocation of the film 140. In addition, the detection method has high accuracy and efficiency, which is beneficial to automation in a production process.

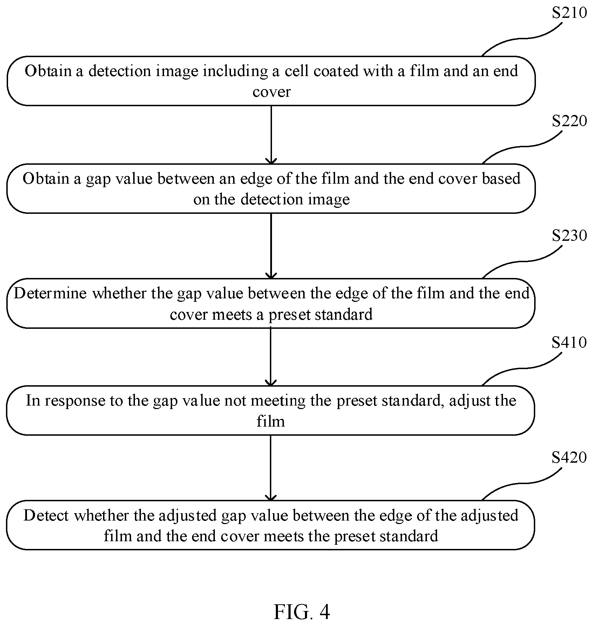

FIG. 4 is a flowchart of a detection method for battery production according to some embodiments of this application. Referring to FIGs. 3 and 4, according to some embodiments of this application, the detection method further includes the following steps. Step S410: In response to the gap value not meeting the preset standard, adjust the gap between the edge of the film 140 and the end cover 110. Step S420: Detect whether the adjusted gap value between the edge of the adjusted film 140 and the end cover 110 meets the preset standard.

In some embodiments, adjusting the film 140 means adjusting a coating position of the film 140 on the cell 130 so as to adjust the gap between the edge of the film 140 and the end cover 110. An adjustment method may include removing the entire film 140 and then applying the film 140 again or directly adjusting a local position of the film 140, which is not limited in this application. In some embodiments, the detection of the gap value and the adjustment of the film 140 can be performed in situ at a film coating position.

Adjusting products with unqualified initial coating of the film 140 can increase the probability that products with defective coating of the film 140 are changed into good products, thereby increasing the total product yield of batteries and avoiding the waste of the film 140.

According to some embodiments of this application, the cell 130 includes a top surface 130A, a bottom surface 130B, a first side surface 130C, and a second side surface 130D, where the top surface 130A is close to the end cover 110 and opposite the end cover 110, and the first side surface 130C and the second side surface 130D are adjacent to each other and are located between the top surface 130A and the bottom surface 130B. The detection image includes a first detection image and a second detection image, where the first detection image includes the first side surface 130C of the cell 130, and the second detection image includes the second side surface 130D of the cell 130. The determining, based on the detection image, whether the gap value between the edge of the film 140 and the end cover 110 meets a preset standard includes: in response to determining, based on the first detection image, that the gap value between the edge of the film 140 and the end cover 110 meets the preset standard and determining, based on the second detection image, that the gap value between the edge of the film 140 and the end cover 110 meets the preset standard, determining that the gap value between the edge of the film 140 and the end cover 110 meets the preset standard.

The steps of determining, based on the first detection image, that the gap value between the edge of the film 140 and the end cover 110 meets the preset standard and determining, based on the second detection image, that the gap value between the edge of the film 140 and the end cover 110 meets the preset standard can be performed simultaneously or sequentially.

Detecting the gap value between the edge of the film 140 and an edge of the top cover 110 in multiple directions can determine the coating quality of the film 140 of the cell more accurately, ensuring the product yield.

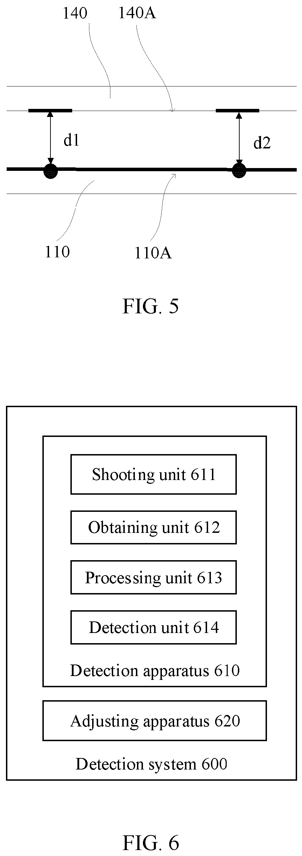

Referring to FIG. 5, FIG. 5 is an enlarged view of zone A in FIG. 3. According to some embodiments of this application, the determining, based on the detection image, whether the gap value between the edge of the film 140 and the end cover 110 meets a preset standard includes: detecting, from the detection image, a first edge line 110A of the end cover 110 and a second edge line 140A of the film 140 close to the first edge line 110A; and in response to the second edge line 140A having not been detected in the detection image, determining that the gap value between the edge of the film 140 and the end cover 110 does not meet the preset standard.

Under some circumstances, the second edge line 140A having not been detected may correspond to a circumstance such as absence or damage of the film 140. When the second edge line 140A has not been detected, the coating of the film 140 may be determined to be unqualified. In some embodiments, in response to the second edge line 140A having not been detected in the detection image, the cell can be removed from a production line.

Such arrangement allows for timely removal of the cell 130 with the film 140 damaged or absent, ensuring the product yield.

According to some embodiments of this application, the determining, based on the detection image, whether the gap value between the edge of the film 140 and the end cover 110 meets a preset standard includes: in response to the first edge line 110A of the end cover 110 and the second edge line 140A of the film 140 close to the first edge line 110A having been identified, obtaining a distance dn (n=1, 2, ...) from at least one point on the first edge line 110A to the second edge line 140A in a preset direction, and taking the distance dn as the gap value, where the preset direction is perpendicular to a surface 130B of the end cover 110 close to the cell 130; and determining, based on at least one gap value corresponding to the at least one point, whether the gap value between the edge of the film 140 and the end cover 110 meets the preset standard.

For example, FIG. 3 shows distances d1 and d2 from two points on the first edge line 110A to the second edge line 140A. It should be understood that more detection sites lead to more accurate detection.

Detecting whether the gap value is qualified at multiple detection sites can determine the coating quality of the film 140 more accurately, ensuring the product yield.

According to some embodiments of this application, the determining, based on at least one gap value corresponding to the at least one point, whether the gap value between the edge of the film 140 and the end cover 110 meets the preset standard includes: in response to the at least one gap value corresponding to the at least one point being within a preset range, determining that the gap value between the edge of the film 140 and the end cover 110 meets the preset standard.

In a specific embodiment, the preset range may be, for example, 0.1 centimeters (cm) to 0.5 cm. The at least one gap value corresponding to the at least one point being within the preset range may mean that distance dn (n=1, 2, ...) from at least one point on the first edge line 110A to the second edge line 140A is totally greater than or equal to 0.1 cm and less than or equal to 0.5 cm. The preset range may be set based on production requirements for different types of batteries, which is not limited in this application.

Setting a strict detection standard for detecting the gap value helps to better control the coating quality of the film 140 and increase the product yield.

According to some embodiments of this application, the at least one point includes at least one equal diversion point on the first edge line 110A.

Referring to FIG. 3, for example, FIG. 3 shows quartering points (three points that equally divide the first edge line 110A into four parts) on the first edge line 110A. The at least one point may include at least one of the quartering points.

The equal diversion point on the first edge line 110A typically corresponds to a hot melting site of the film 140 and the end cover 110. A gap value of the equal diversion point has greater influence on the hot melting quality. Detecting the gap value of this position can avoid battery scrap caused by the issues such as hot-melting explosion points formed in subsequent hot melting treatment on the film 140 and the end cover 110.

According to some embodiments of this application, the adjusting the gap value between the edge of the film 140 and the end cover 110 includes: adjusting a coating position of the film 140 on the cell 130 based on the gap value and a standard gap value between the edge of the film 140 and the end cover 110.

In some embodiments, the adjusting a coating position of the film 140 on the cell 130 includes performing adjustment at various detection sites based on a difference between a gap value of this position and the standard gap value. For example, referring to FIG. 5, when a gap value of a detection site is less than the standard gap value, the film 140 is adjusted to make the edge of the film 140 at this position further away from the first edge line 110A of the end cover 110 by a distance, where the distance further away from the first edge line 110A is a difference between the gap value and the standard gap value. When a gap value of a detection site is greater than the standard gap value, the film 140 is adjusted to make the edge of the film 140 at this position closer to the first edge line 110A of the end cover 110 by a distance, where the distance closer to the first edge line 110A is a difference between the gap value and the standard gap value.

The above adjustment allows the film 140 at a position where good hot melting can be formed, thereby increasing the product yield.

Referring to FIG. 6, FIG. 6 is a schematic block diagram of a detection system 600 for battery production according to some embodiments of this application. Some embodiments of this application provide a detection system 600 for battery production, where a battery includes a cell 130 and an end cover 110. The detection system 600 includes a detection apparatus 610, where the detection apparatus 610 includes: a shooting unit 611, configured to shoot a detection image including the cell 130 coated with a film 140 and the end cover 110, where the cell 130 coated with the film 140 is fixedly connected to the end cover 110; an obtaining unit 612, configured to obtain a gap value between an edge of the film 140 and the end cover 110 based on the detection image; and a processing unit 613, configured to determine whether the gap value between the edge of the film 140 and the end cover 110 meets a preset standard.

According to some embodiments of this application, the detection system 600 further includes: an adjusting apparatus 620 in communication connection with the detection apparatus 610 and configured to: in response to the gap value not meeting the preset standard, adjust a gap between the edge of the film 140 and the end cover 110. The detection apparatus 610 is further configured to detect whether the adjusted gap value between the edge of the adjusted film 140 and the end cover 110 meets the preset standard.

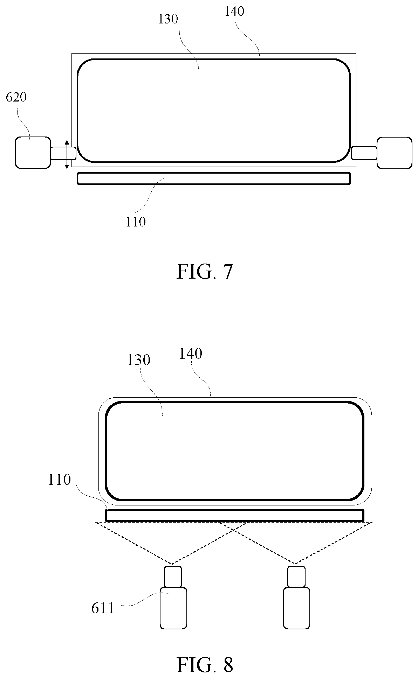

Referring to FIG. 7, FIG. 7 is a schematic structural diagram of an adjusting apparatus 620 according to some embodiments of this application. In some embodiments, the adjusting apparatus 620 may include a group of clamps, where the clamp can clamp the film 140. The adjusting apparatus 620 can control a coating position of the film 140 on the cell 130 according to a detection result of the detection apparatus 610.

Referring to FIG. 8, FIG. 8 is a schematic structural diagram of a shooting unit 611 according to some embodiments of this application. In some embodiments, the detection apparatus 610 may include a plurality of shooting units 611. Same detection images can be obtained by a single shooting unit 611 or a plurality of shooting units 611 in cooperation. FIG. 8 exemplarily shows two shooting units 611, where a shooting range of each shooting unit 611 is shown by dotted lines.

According to some embodiments of this application, referring to FIGs. 3 and 5, a top surface 130A, a bottom surface 130B, a first side surface 130C, and a second side surface 130D are included, where the top surface 130A is close to the end cover 110 and opposite the end cover 110, and the first side surface 130C and the second side surface 130D are adjacent to each other and are located between the top surface 130A and the bottom surface 130B. The detection image includes a first detection image and a second detection image, where the first detection image includes the first side surface 130C of the cell 130, and the second detection image includes the second side surface 130D of the cell 130. The processing unit 613 is further configured to: in response to determining, based on the first detection image, that the gap value between the edge of the film 140 and the end cover 110 meets the preset standard and determining, based on the second detection image, that the gap value between the edge of the film 140 and the end cover 110 meets the preset standard, determine that the gap value between the edge of the film 140 and the end cover 110 meets the preset standard.

According to some embodiments of this application, the detection system 600 further includes: a detection unit 614, configured to: detect, from the detection image, a first edge line 110A of the end cover 110 and a second edge line 140A of the film 140 close to the first edge line 110A; and in response to the second edge line 140A having not been detected in the detection image, determine that the gap value between the edge of the film 140 and the end cover 110 does not meet the preset standard.

According to some embodiments of this application, the processing unit 613 is further configured to: in response to the first edge line 110A of the end cover 110 and the second edge line 140A of the film 140 close to the first edge line 110A having been identified, obtain a distance dn (n=1, 2, ...) from at least one point on the first edge line 110A to the second edge line 140A in a preset direction, and take the distance dn as the gap value, where the preset direction is perpendicular to a surface 130B of the end cover 110 close to the cell 130; and determine, based on at least one gap value corresponding to the at least one point, whether the gap value between the edge of the film 140 and the end cover 110 meets the preset standard.

According to some embodiments of this application, the processing unit 613 is further configured to: in response to the at least one gap value corresponding to the at least one point being within a preset range, determine that the gap value between the edge of the film 140 and the end cover 110 meets the preset standard.

According to some embodiments of this application, the detection apparatus 610 includes a plurality of shooting units 611, where relative positions between the plurality of shooting units 611 can be freely adjusted. The relative positions between the plurality of shooting units 611 can be freely adjusted, allowing the detection of the gap value to be applicable to different types of batteries.

According to some embodiments of this application, the shooting unit 611 is a CCD camera.

According to some embodiments of this application, the adjusting apparatus 620 is further configured to adjust a coating position of the film 140 on the cell 130 based on the gap value and a standard gap value between the edge of the film 140 and the end cover 110.

Some embodiments of this application provide a production method for battery. The production method includes: determining, using the detection method according to any one of the embodiments of this application, whether a gap value between an edge of a film 140 applied on a cell 130 and an end cover 110 meets a preset standard; and in response to determining that the gap value between the edge of the film 140 and the end cover 110 meets the preset standard, performing hot melting treatment on the film 140 and the end cover 110.

Detecting the gap value between the edge of the film 140 and an edge of the end cover 110 before hot melting treatment can avoid the problem of battery quality deterioration caused by dislocation of the film 140. In addition, the hot melting treatment is only performed on products with qualified coating of the film 140, thereby improving the battery production efficiency and reducing the costs.

In some embodiments, when adjusting a gap between the edge of the film 140 and the end cover 110 in response to the gap value not meeting the preset standard, the production method further includes: in response to the adjusted gap value between the edge of the adjusted film 140 and the end cover 110 meeting the preset standard, performing hot melting treatment on the adjusted film 140 and the end cover 110.

Adjusting products with unqualified coating of the film 140 can increase the probability that products with defective coating of the film are changed into good products, thereby increasing the total product yield of batteries and avoiding the unnecessary waste.

In some embodiments, the production method further includes: in response to the adjusted gap value not meeting the preset standard, removing the cell 130 coated with the film 140 and the end cover 110 from a production line.

After the cell 130 coated with the film 140 and the end cover 110 are removed from the production line, manual detection can be performed to further determine the coating quality of the film 140. In addition, after the coating of the film 140 is manually adjusted to be qualified, the cell 130 coated with the film 140 and the end cover 110 enter the production line again.

It can be understood that the products on which coating of the film 140 does not meet the standard are removed from the production line in a timely manner and are not subjected to subsequent treatments such as hot melting, which can improve the product yield and the production efficiency.

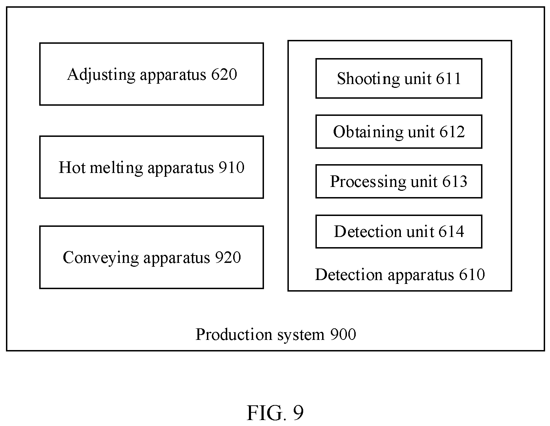

Referring to FIG. 9, FIG. 9 is a schematic block diagram of a production system 900 according to some embodiments of this application. Some embodiments of this application provide a production system 900 for battery. The production system 900 includes: the detection system 600 according to any one of the embodiments of this application, configured to determine whether a gap value between an edge of a film 140 applied on a cell 130 and an end cover 110 meets a preset standard; and a hot melting apparatus 910 in communication connection with a detection apparatus 610 and configured to: in response to determining that the gap value between the edge of the film 140 and the end cover 110 meets the preset standard, perform hot melting treatment on the film 140 and the end cover 110.

In some embodiments, when the detection system 900 includes an adjusting apparatus 620, the hot melting apparatus 910 is further configured to: in response to the adjusted gap value between the edge of the adjusted film 140 and the end cover 110 meeting the preset standard, perform hot melting treatment on the adjusted film 140 and the end cover 110.

In some embodiments, the production system 900 further includes a conveying apparatus 920 in communication connection with the detection apparatus 610 and configured to: in response to the adjusted gap value not meeting the preset standard, remove the cell 130 coated with the film 140 and the end cover 110 from a production line.

In some embodiments, the conveying apparatus 920 is further configured to: in response to an edge line of the film 140 having not been detected in a detection image, remove the cell 130 coated with the film 140 and the end cover 110 from the production line.

Some embodiments of this application provide an electronic device. The electronic device includes: at least one processor; and a memory in communication connection with the at least one processor, where a computer program is stored in the memory, and when the computer program is executed by the at least one processor, the detection method and the production method according to the embodiments of this application are implemented.

Some embodiments of this application provide a system for battery, where the system includes the electronic device according to the embodiments of this application.

Some embodiments of this application provide a non-transient computer-readable storage medium, where a computer program is stored in the non-transient computer-readable storage medium, and when the computer program is executed by a processor, the detection method and the production method according to the embodiments of this application are implemented.

Some embodiments of this application provide a computer program product including a computer program, where when the computer program is executed by a processor, the detection method and the production method according to the embodiments of this application are implemented.

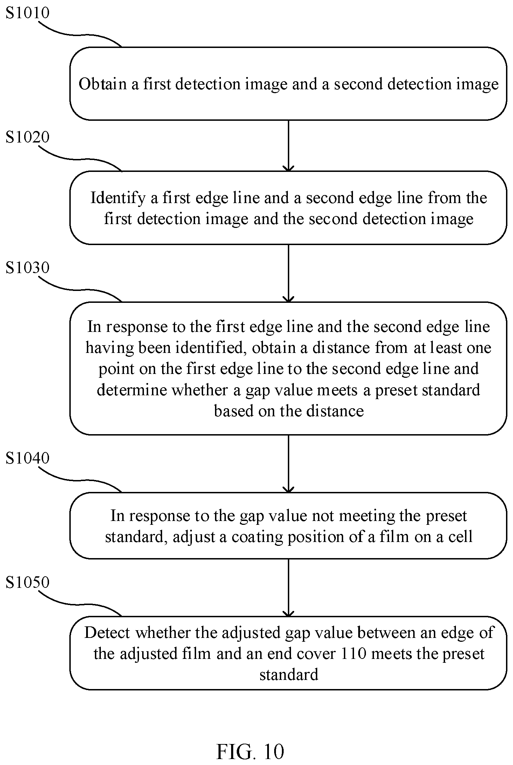

Referring to FIG. 10, FIG. 10 is a flowchart of a detection method for battery production according to some embodiments of this application. In some specific embodiments, referring to FIGs. 1, 3, 5, and 10, the detection method may include the following steps. Step S1010: Obtain a first detection image including a first side surface 130C of a cell 130 coated with a film 140 and an end cover 110 and a second detection image including a second side surface 130D of the cell 130 coated with the film 140. Step S1020: Identify a first edge line 110A of the end cover 110 and a second edge line 140A of the film 140 close to the first edge line 110A from the first detection image and the second detection image. Step S1030: In response to the first edge line 110A and the second edge line 140A having been identified, obtain a distance dn from at least one point on the first edge line 110A to the second edge line 140A, take the distance dn as a gap value, and determine, based on at least one gap value corresponding to the at least one point, whether a gap value between an edge of the film 140 and the end cover 110 meets a preset standard. Step S1040: In response to the at least one gap value not meeting the preset standard, adjust a coating position of the film 140 on the cell 130. Step S1050: Detect whether the adjusted gap value between the edge of the adjusted film 140 and the end cover 110 meets the preset standard.

In some specific embodiments, the detection apparatus 610 includes four shooting units 611. The four shooting units 611 are all CCD cameras, where two CCD cameras are configured to shoot the first detection image including the first side surface 130C of the cell 130 coated with the film 140 and the end cover 110, and the other two CCD cameras are configured to shoot the second detection image including the second side surface 130D of the cell 130 coated with the film 140 and the end cover 110. In addition, the four CCD cameras are configured to obtain detection images simultaneously. The adjusting apparatus 620 is a pair of grippers (referring to FIG. 7), the grippers can grip the edge of the film 140 and are configured to adjust a coating position of the film on the cell based on the gap value and a standard gap value between the edge of the film and the end cover that are obtained by the obtaining unit.

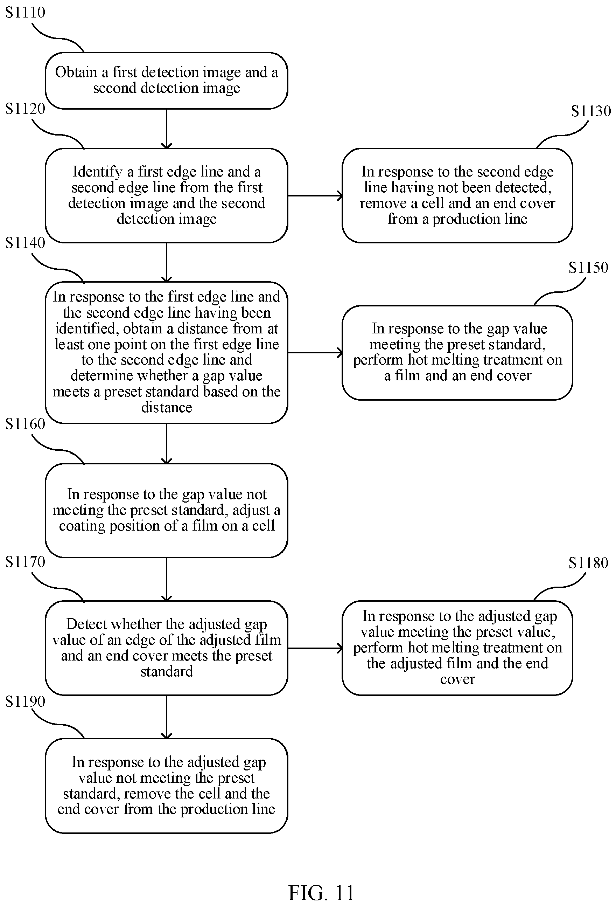

Referring to FIG. 11, FIG. 11 is a flowchart of a production method according to some embodiments of this application. In some specific embodiments, the production method for battery may include the following steps. Step S1110: Obtain a first detection image including a first side surface 130C of a cell 130 coated with a film 140 and an end cover 110 and a second detection image including a second side surface 130D of the cell 130 coated with the film 140. Step S1120: Identify a first edge line 110A of the end cover 110 and a second edge line 140A of the film 140 close to the first edge line 110A from the first detection image and the second detection image. Step S1130: In response to the second edge line 140A having not been identified, determine that a gap value between an edge of the film 140 and the end cover 110 does not meet a preset standard, and remove the cell 130 coated with the film 140 and the end cover 110 from a production line. Step S1140: In response to the first edge line 110A and the second edge line 140A having been identified, obtain a distance dn from at least one point on the first edge line 110A to the second edge line 140A, take the distance dn as a gap value, and determine, based on at least one gap value corresponding to the at least one point, whether the gap value between the edge of the film 140 and the end cover 110 meets the preset standard. Step S1150: In response to the at least one gap value meeting the preset standard, perform hot melting treatment on the film 140 and the end cover 110. Step S1160: In response to the at least one gap value not meeting the preset standard, adjust a coating position of the film 140 on the cell 130. Step S1170: Detect whether the adjusted gap value between the edge of the adjusted film 140 and the end cover 110 meets the preset standard. Step S 1180: In response to the adjusted gap value meeting the preset standard, perform hot melting treatment on the adjusted film 140 and the end cover 110. Step S1190: In response to the adjusted gap value not meeting the preset standard, remove the cell 130 coated with the film 140 and the end cover 110 from the production line.

In conclusion, it should be noted that the foregoing embodiments are for description of the technical solutions of this application only rather than for limiting this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A detection method for battery production, wherein the battery comprises a cell and an end cover; and the detection method comprises:
obtaining (S210) a detection image comprising the cell coated with a film and the end cover, wherein the cell coated with the film is fixedly connected to the end cover;
obtaining (S220) a gap value between an edge of the film and the end cover based on the detection image;
determining (S230) whether the gap value between the edge of the film and the end cover meets a preset standard;
in response to the gap value not meeting the preset standard, adjusting (S410) a gap between the edge of the film and the end cover; and
detecting (S420) whether the adjusted gap value between the edge of the adjusted film and the end cover meets the preset standard.

2. The detection method according to claim 1, wherein the cell comprises a top surface, a bottom surface, a first side surface, and a second side surface, wherein the top surface is close to the end cover and opposite the end cover, and the first side surface and the second side surface are adjacent to each other and are located between the top surface and the bottom surface;
the detection image comprises a first detection image and a second detection image, the first detection image comprises the first side surface of the cell, and the second detection image comprises the second side surface of the cell; and the determining (S230), based on the detection image, whether the gap value between the edge of the film and the end cover meets a preset standard comprises:
in response to determining, based on the first detection image, that the gap value between the edge of the film and the end cover meets the preset standard and determining, based on the second detection image, that the gap value between the edge of the film and the end cover meets the preset standard, determining that the gap value between the edge of the film and the end cover meets the preset standard.

3. The detection method according to claim 1, wherein the determining (S230), based on the detection image, whether the gap value between the edge of the film and the end cover meets a preset standard comprises:
identifying, from the detection image, a first edge line of the end cover and a second edge line of the film close to the first edge line; and
in response to the second edge line having not been detected in the detection image, determining that the gap value between the edge of the film and the end cover does not meet the preset standard.

4. The detection method according to claim 3, wherein the determining (S230), based on the detection image, whether the gap value between the edge of the film and the end cover meets a preset standard further comprises:
in response to the first edge line of the end cover and the second edge line of the film close to the first edge line having been identified, obtaining a distance from at least one point on the first edge line to the second edge line in a preset direction, and taking the distance as the gap value, wherein the preset direction is perpendicular to a surface of the end cover close to the cell; and
determining, based on at least one gap value corresponding to the at least one point, whether the gap value between the edge of the film and the end cover meets the preset standard.

5. The detection method according to claim 4, wherein the determining, based on at least one gap value corresponding to the at least one point, whether the gap value between the edge of the film and the end cover meets the preset standard comprises:
in response to the at least one gap value corresponding to the at least one point being within a preset range, determining that the gap value between the edge of the film and the end cover meets the preset standard;
and/or
wherein the at least one point comprises at least one equal diversion point on the first edge line.

6. The detection method according to claim 1, wherein the adjusting (S410) a gap between the edge of the film and the end cover comprises:
adjusting a coating position of the film on the cell based on the gap value and a standard gap value between the edge of the film and the end cover.

7. A detection system (600) for battery production, wherein a battery comprises a cell (130) and an end cover (110), and the detection system (600) comprises a detection apparatus (610), wherein the detection apparatus (610) comprises:
a shooting unit (611), configured to shoot a detection image comprising the cell (130) coated with a film (140) and the end cover (110), wherein the cell (130) coated with the film (140) is fixedly connected to the end cover (110);
an obtaining unit (612), configured to obtain a gap value between an edge of the film (140) and the end cover (110) based on the detection image; and
a processing unit (613), configured to determine whether the gap value between the edge of the film (140) and the end cover (110) meets a preset standard,
an adjusting apparatus (620) in communication connection with the detection apparatus (610) and configured to: in response to the gap value not meeting the preset standard, adjust a gap between the edge of the film (140) and the end cover (110); and
the detection apparatus (610) is further configured to detect whether the adjusted gap value between the edge of the adjusted film (140) and the end cover (110) meets the preset standard.

8. The detection system (600) according to claim 7, wherein the cell (130) comprises a top surface (130A), a bottom surface (130B), a first side surface (130C), and a second side surface (130D), wherein the top surface (130A) is close to the end cover (110) and opposite the end cover (110), and the first side surface (130C) and the second side surface (130D) are adjacent to each other and are located between the top surface (130A) and the bottom surface (130B);
the detection image comprises a first detection image and a second detection image, the first detection image comprises the first side surface (130C) of the cell (130), and the second detection image comprises the second side surface (130D) of the cell (130); and the processing unit (613) is further configured to:
in response to determining, based on the first detection image, that the gap value between the edge of the film (140) and the end cover (110) meets the preset standard and determining, based on the second detection image, that the gap value between the edge of the film (140) and the end cover (110) meets the preset standard, determine that the gap value between the edge of the film (140) and the end cover (110) meets the preset standard.

9. The detection system (600) according to claim 7, further comprising:
a detection unit (614), configured to: detect, from the detection image, a first edge line (110A) of the end cover (110) and a second edge line (140A) of the film (140) close to the first edge line (110A); and
in response to the second edge line (140A) having not been detected in the detection image, determine that the gap value between the edge of the film (140) and the end cover (110) does not meet the preset standard.

10. The detection system (600) according to claim 9, wherein the processing unit (613) is further configured to:
in response to the first edge line (110A) of the end cover (110) and the second edge line (140A) of the film (140) close to the first edge line (110A) having been identified, obtain a distance (dn) from at least one point on the first edge line (110A) to the second edge line (140A) in a preset direction, and take the distance (dn) as the gap value, wherein the preset direction is perpendicular to a surface (130B) of the end cover (110) close to the cell (130); and
determine, based on at least one gap value corresponding to the at least one point, whether the gap value between the edge of the film (140) and the end cover (110) meets the preset standard.

11. The detection system (600) according to claim 10, wherein the processing unit (613) is further configured to:
in response to the at least one gap value corresponding to the at least one point being within a preset range, determine that the gap value between the edge of the film (140) and the end cover (110) meets the preset standard.

12. The detection system (600) according to any one of claims 7 to 11, wherein the detection apparatus (610) comprises a plurality of shooting units (611);
or
wherein the shooting unit (611) is a CCD camera.

13. The detection system (600) according to any one of claims 7 to 12, wherein the adjusting apparatus (620) is further configured to adjust a coating position of the film (140) on the cell (130) based on the gap value and a standard gap value between the edge of the film (140) and the end cover (110).

14. A production method for battery, wherein the production method comprises:
determining, using the detection method according to any one of claims 1 to 6, whether a gap value between an edge of a film applied on a cell and an end cover meets a preset standard; and
in response to determining that the gap value between the edge of the film and the end cover meets the preset standard, performing hot melting treatment on the film and the end cover;
preferably,
wherein when adjusting a gap between the edge of the film and the end cover in response to the gap value not meeting the preset standard, the production method further comprises:
in response to the adjusted gap value between the edge of the adjusted film and the end cover meeting the preset standard, performing hot melting treatment on the adjusted film and the end cover;
more preferably,
wherein the production method further comprises:
in response to the adjusted gap value not meeting the preset standard, removing the cell coated with the film and the end cover from a production line.

15. A production system (900) for battery, wherein the production system (900) comprises:
the detection system (600) according to any one of claims 7 to 13, configured to determine whether a gap value between an edge of a film (140) applied on a cell (130) and an end cover (110) meets a preset standard; and
a hot melting apparatus (910) in communication connection with a detection apparatus (610) and configured to: in response to determining that the gap value between the edge of the film (140) and the end cover (110) meets the preset standard, perform hot melting treatment on the film (140) and the end cover (110);
preferably,
wherein when the detection system (600) comprises an adjusting apparatus (620), the hot melting apparatus (910) is further configured to:
in response to the adjusted gap value between the edge of the adjusted film (140) and the end cover (110) meeting the preset standard, perform hot melting treatment on the adjusted film (140) and the end cover (110);
more preferably,
further comprising:
a conveying apparatus (920) in communication connection with the detection apparatus (610) and configured to: in response to the adjusted gap value not meeting the preset standard, remove the cell (130) coated with the film (140) and the end cover (110) from a production line.

16. An electronic device, comprising:
at least one processor; and
a memory in communication connection with the at least one processor, wherein
a computer program is stored in the memory, and when the computer program is executed by the at least one processor, the detection method according to any one of claims 1 to 6 or the production method according to claim 14 is implemented.

## Patentansprüche

1. Detektionsverfahren für die Batterieherstellung, wobei die Batterie eine Zelle und eine Endabdeckung umfasst; und wobei das Detektionsverfahren Folgendes umfasst:
Erfassen (S210) eines Detektionsbildes, das die mit einem Film beschichtete Zelle und die Endabdeckung umfasst, wobei die mit dem Film beschichtete Zelle fest mit der Endabdeckung verbunden ist;
Erfassen (S220) eines Spaltwerts zwischen einem Rand des Films und der Endabdeckung basierend auf dem Detektionsbild;
Bestimmen (S230), ob der Spaltwert zwischen dem Rand des Films und der Endabdeckung einen voreingestellten Standard erfüllt;
als Reaktion darauf, dass der Spaltwert den voreingestellten Standard nicht erfüllt, Anpassen (S410) eines Spalts zwischen dem Rand des Films und der Endabdeckung; und
Detektieren (S420), ob der angepasste Spaltwert zwischen dem Rand des angepassten Films und der Endabdeckung den voreingestellten Standard erfüllt.

2. Detektionsverfahren nach Anspruch 1, wobei die Zelle eine obere Fläche, eine untere Fläche, eine erste Seitenfläche und eine zweite Seitenfläche umfasst, wobei die obere Fläche nahe der Endabdeckung und gegenüber der Endabdeckung liegt und die erste Seitenfläche und die zweite Seitenfläche aneinander angrenzen und zwischen der oberen Fläche und der unteren Fläche angeordnet sind;
wobei das Detektionsbild ein erstes Detektionsbild und ein zweites Detektionsbild umfasst, das erste Detektionsbild die erste Seitenfläche der Zelle umfasst und das zweite Detektionsbild die zweite Seitenfläche der Zelle umfasst; und wobei das Bestimmen (S230) basierend auf dem Detektionsbild, ob der Spaltwert zwischen dem Rand des Films und der Endabdeckung einen voreingestellten Standard erfüllt, Folgendes umfasst:
als Reaktion auf das Bestimmen, basierend auf dem ersten Detektionsbild, dass der Spaltwert zwischen dem Rand des Films und der Endabdeckung den voreingestellten Standard erfüllt, und das Bestimmen, basierend auf dem zweiten Detektionsbild, dass der Spaltwert zwischen dem Rand des Films und der Endabdeckung den voreingestellten Standard erfüllt, Bestimmen, dass der Spaltwert zwischen dem Rand des Films und der Endabdeckung den voreingestellten Standard erfüllt.

3. Detektionsverfahren nach Anspruch 1, wobei das Bestimmen (S230), basierend auf dem Detektionsbild, ob der Spaltwert zwischen dem Rand des Films und der Endabdeckung einen voreingestellten Standard erfüllt, Folgendes umfasst:
Identifizieren, aus dem Detektionsbild, einer ersten Randlinie der Endabdeckung und einer zweiten Randlinie des Films nahe der ersten Randlinie; und
als Reaktion darauf, dass die zweite Randlinie nicht in dem Detektionsbild detektiert wurde, Bestimmen, dass der Spaltwert zwischen dem Rand des Films und der Endabdeckung den voreingestellten Standard nicht erfüllt.

4. Detektionsverfahren nach Anspruch 3, wobei das Bestimmen (S230), basierend auf dem Detektionsbild, ob der Spaltwert zwischen dem Rand des Films und der Endabdeckung einen voreingestellten Standard erfüllt, ferner Folgendes umfasst:
als Reaktion darauf, dass die erste Randlinie der Endabdeckung und die zweite Randlinie des Films nahe der ersten Randlinie identifiziert wurden, Erfassen eines Abstands von mindestens einem Punkt auf der ersten Randlinie zu der zweiten Randlinie in einer voreingestellten Richtung und Verwenden des Abstands als den Spaltwert, wobei die voreingestellte Richtung senkrecht zu einer Fläche der Endabdeckung nahe der Zelle ist; und
Bestimmen, basierend auf mindestens einem Spaltwert, der dem mindestens einen Punkt entspricht, ob der Spaltwert zwischen dem Rand des Films und der Endabdeckung den voreingestellten Standard erfüllt.

5. Detektionsverfahren nach Anspruch 4, wobei das Bestimmen, basierend auf mindestens einem Spaltwert, der dem mindestens einen Punkt entspricht, ob der Spaltwert zwischen dem Rand des Films und der Endabdeckung den voreingestellten Standard erfüllt, Folgendes umfasst:
als Reaktion darauf, dass der mindestens eine Spaltwert, der dem mindestens einen Punkt entspricht, innerhalb eines voreingestellten Bereichs liegt, Bestimmen, dass der Spaltwert zwischen dem Rand des Films und der Endabdeckung den voreingestellten Standard erfüllt;
und/oder
wobei der mindestens eine Punkt mindestens einen Punkt gleicher Ablenkung auf der ersten Randlinie umfasst.

6. Detektionsverfahren nach Anspruch 1, wobei das Anpassen (S410) eines Spalts zwischen dem Rand des Films und der Endabdeckung Folgendes umfasst:
Anpassen einer Beschichtungsposition des Films auf der Zelle basierend auf dem Spaltwert und einem Standardspaltwert zwischen dem Rand des Films und der Endabdeckung.

7. Detektionssystem (600) für die Batterieherstellung, wobei eine Batterie eine Zelle (130) und eine Endabdeckung (110) umfasst und das Detektionssystem (600) eine Detektionseinrichtung (610) umfasst, wobei die Detektionseinrichtung (610) Folgendes umfasst:
eine Aufnahmeeinheit (611), die dazu ausgelegt ist, ein Detektionsbild aufzunehmen, das die mit einem Film (140) beschichtete Zelle (130) und die Endabdeckung (110) umfasst, wobei die mit dem Film (140) beschichtete Zelle (130) fest mit der Endabdeckung (110) verbunden ist;
eine Erfassungseinheit (612), die dazu ausgelegt ist, einen Spaltwert zwischen einem Rand des Films (140) und der Endabdeckung (110) basierend auf dem Detektionsbild zu erfassen; und
eine Verarbeitungseinheit (613), die dazu ausgelegt ist, zu bestimmen, ob der Spaltwert zwischen dem Rand des Films (140) und der Endabdeckung (110) einen voreingestellten Standard erfüllt,
eine Anpassungseinrichtung (620), die mit der Detektionseinrichtung (610) in Kommunikationsverbindung steht und zu Folgendem ausgelegt ist: als Reaktion darauf, dass der Spaltwert den voreingestellten Standard nicht erfüllt, Anpassen eines Spalts zwischen dem Rand des Films (140) und der Endabdeckung (110); und
wobei die Detektionseinrichtung (610) ferner dazu ausgelegt ist, zu detektieren, ob der angepasste Spaltwert zwischen dem Rand des angepassten Films (140) und der Endabdeckung (110) den voreingestellten Standard erfüllt.

8. Detektionssystem (600) nach Anspruch 7, wobei die Zelle (130) eine obere Fläche (130A), eine untere Fläche (130B), eine erste Seitenfläche (130C) und eine zweite Seitenfläche (130D) umfasst, wobei die obere Fläche (130A) nahe der Endabdeckung (110) und gegenüber der Endabdeckung (110) liegt und die erste Seitenfläche (130C) und die zweite Seitenfläche (130D) aneinander angrenzen und zwischen der oberen Fläche (130A) und der unteren Fläche (130A) angeordnet sind;
wobei das Detektionsbild ein erstes Detektionsbild und ein zweites Detektionsbild umfasst, das erste Detektionsbild die erste Seitenfläche (130C) der Zelle (130) umfasst und das zweite Detektionsbild die zweite Seitenfläche (130D) der Zelle (130) umfasst; und wobei die Verarbeitungseinheit (613) ferner zu Folgendem ausgelegt ist:
als Reaktion auf das Bestimmen, basierend auf dem ersten Detektionsbild, dass der Spaltwert zwischen dem Rand des Films (140) und der Endabdeckung (110) den voreingestellten Standard erfüllt, und das Bestimmen, basierend auf dem zweiten Detektionsbild, dass der Spaltwert zwischen dem Rand des Films (140) und der Endabdeckung (110) den voreingestellten Standard erfüllt, Bestimmen, dass der Spaltwert zwischen dem Rand des Films (140) und der Endabdeckung (110) den voreingestellten Standard erfüllt.

9. Detektionssystem (600) nach Anspruch 7, das ferner Folgendes umfasst:
eine Detektionseinheit (614), die zu Folgendem ausgelegt ist: Detektieren, aus dem Detektionsbild, einer ersten Randlinie (110A) der Endabdeckung (110) und einer zweiten Randlinie (140A) des Films (140) nahe der ersten Randlinie (110A); und
als Reaktion darauf, dass die zweite Randlinie (140A) nicht in dem Detektionsbild detektiert wurde, Bestimmen, dass der Spaltwert zwischen dem Rand des Films (140) und der Endabdeckung (110) den voreingestellten Standard nicht erfüllt.

10. Detektionssystem (600) nach Anspruch 9, wobei die Verarbeitungseinheit (613) ferner zu Folgendem ausgelegt ist:
als Reaktion darauf, dass die erste Randlinie (110A) der Endabdeckung (110) und die zweite Randlinie (140A) des Films (140) nahe der ersten Randlinie (110A) identifiziert wurden, Erfassen eines Abstands (dn) von mindestens einem Punkt auf der ersten Randlinie (110A) zu der zweiten Randlinie (140A) in einer voreingestellten Richtung und Verwenden des Abstands (dn) als den Spaltwert, wobei die voreingestellte Richtung senkrecht zu einer Fläche (130B) der Endabdeckung (110) nahe der Zelle (130) ist; und
Bestimmen, basierend auf mindestens einem Spaltwert, der dem mindestens einen Punkt entspricht, ob der Spaltwert zwischen dem Rand des Films (140) und der Endabdeckung (110) den voreingestellten Standard erfüllt.

11. Detektionssystem (600) nach Anspruch 10, wobei die Verarbeitungseinheit (613) ferner zu Folgendem ausgelegt ist:
als Reaktion darauf, dass der mindestens eine Spaltwert, der dem mindestens einen Punkt entspricht, innerhalb eines voreingestellten Bereichs liegt, Bestimmen, dass der Spaltwert zwischen dem Rand des Films (140) und der Endabdeckung (110) den voreingestellten Standard erfüllt.

12. Detektionssystem (600) nach einem der Ansprüche 7 bis 11, wobei die Detektionseinrichtung (610) mehrere Aufnahmeeinheiten (611) umfasst;
oder
wobei die Aufnahmeeinheit (611) eine CCD-Kamera ist.

13. Detektionssystem (600) nach einem der Ansprüche 7 bis 12, wobei die Anpassungseinrichtung (620) ferner dazu ausgelegt ist, eine Beschichtungsposition des Films (140) auf der Zelle (130) basierend auf dem Spaltwert und einem Standardspaltwert zwischen dem Rand des Films (140) und der Endabdeckung (110) anzupassen.

14. Herstellungsverfahren für eine Batterie, wobei das Herstellungsverfahren Folgendes umfasst:
Bestimmen, unter Verwendung des Detektionsverfahrens nach einem der Ansprüche 1 bis 6, ob ein Spaltwert zwischen einem Rand eines auf einer Zelle aufgebrachten Films und einer Endabdeckung einen voreingestellten Standard erfüllt; und
als Reaktion auf das Bestimmen, dass der Spaltwert zwischen dem Rand des Films und der Endabdeckung den voreingestellten Standard erfüllt, Durchführen einer Heißschmelzbehandlung an dem Film und der Endabdeckung;
vorzugsweise
wobei beim Anpassen eines Spalts zwischen dem Rand des Films und der Endabdeckung als Reaktion darauf, dass der Spaltwert den voreingestellten Standard nicht erfüllt, das Herstellungsverfahren ferner Folgendes umfasst:
als Reaktion darauf, dass der angepasste Spaltwert zwischen dem Rand des angepassten Films und der Endabdeckung den voreingestellten Standard erfüllt, Durchführen einer Heißschmelzbehandlung an dem angepassten Film und der Endabdeckung;
weiter bevorzugt
wobei das Herstellungsverfahren ferner Folgendes umfasst:
als Reaktion darauf, dass der angepasste Spaltwert den voreingestellten Standard nicht erfüllt, Entfernen der mit dem Film beschichteten Zelle und der Endabdeckung aus einer Herstellungslinie.

15. Herstellungssystem (900) für eine Batterie, wobei das Herstellungssystem (900) Folgendes umfasst:
das Detektionssystem (600) nach einem der Ansprüche 7 bis 13, das dazu ausgelegt ist, zu bestimmen, ob ein Spaltwert zwischen einem Rand eines auf eine Zelle (130) aufgebrachten Films (140) und einer Endabdeckung (110) einen voreingestellten Standard erfüllt; und
eine Heißschmelzeinrichtung (910), die mit einer Detektionseinrichtung (610) in Kommunikationsverbindung steht und zu Folgendem ausgelegt ist: als Reaktion auf das Bestimmen, dass der Spaltwert zwischen dem Rand des Films (140) und der Endabdeckung (110) den voreingestellten Standard erfüllt, Durchführen einer Heißschmelzbehandlung an dem Film (140) und der Endabdeckung (110);
vorzugsweise
wobei, wenn das Detektionssystem (600) eine Anpassungseinrichtung (620) umfasst, die Heißschmelzeinrichtung (910) ferner zu Folgendem ausgelegt ist:
als Reaktion darauf, dass der angepasste Spaltwert zwischen dem Rand des angepassten Films (140) und der Endabdeckung (110) den voreingestellten Standard erfüllt, Durchführen einer Heißschmelzbehandlung an dem angepassten Film (140) und der Endabdeckung (110);
weiter bevorzugt
ferner umfassend:
eine Fördereinrichtung (920), die mit der Detektionseinrichtung (610) in Kommunikationsverbindung steht und zu Folgendem ausgelegt ist: als Reaktion darauf, dass der angepasste Spaltwert den voreingestellten Standard nicht erfüllt, Entfernen der mit dem Film (140) beschichteten Zelle (130) und der Endabdeckung (110) aus einer Herstellungslinie.

16. Elektronische Vorrichtung, die Folgendes umfasst:
mindestens einen Prozessor; und
einen Speicher, der mit dem mindestens einen Prozessor in Kommunikationsverbindung steht, wobei
ein Computerprogramm in dem Speicher gespeichert ist und, wenn das Computerprogramm durch den mindestens einen Prozessor ausgeführt wird, das Detektionsverfahren nach einem der Ansprüche 1 bis 6 oder das Herstellungsverfahren nach Anspruch 14 implementiert wird.

## Revendications

1. Procédé de détection pour la production de batterie, la batterie comprenant une cellule et un couvercle d'extrémité ; et le procédé de détection comprenant :
l'obtention (S210) d'une image de détection comprenant la cellule revêtue d'un film et le couvercle d'extrémité, la cellule revêtue du film étant connectée de manière fixe au couvercle d'extrémité ;
l'obtention (S220) d'une valeur d'écart entre un bord du film et le couvercle d'extrémité sur la base de l'image de détection ;
la détermination (S230) si la valeur d'écart entre le bord du film et le couvercle d'extrémité respecte une norme prédéfinie ;
en réponse à la valeur d'écart ne respectant pas la norme prédéfinie, l'ajustement (S410) d'un écart entre le bord du film et le couvercle d'extrémité ; et
la détection (S420) si la valeur d'écart ajustée entre le bord du film ajusté et le couvercle d'extrémité respecte la norme prédéfinie.

2. Procédé de détection selon la revendication 1, la cellule comprenant une surface supérieure, une surface inférieure, une première surface latérale et une seconde surface latérale, la surface supérieure étant proche du couvercle d'extrémité et opposée au couvercle d'extrémité, et la première surface latérale et la seconde surface latérale étant adjacentes l'une à l'autre et situées entre la surface supérieure et la surface inférieure ;
l'image de détection comprenant une première image de détection et une seconde image de détection, la première image de détection comprenant la première surface latérale de la cellule, et la seconde image de détection comprenant la seconde surface latérale de la cellule ; et la détermination (S230), sur la base de l'image de détection, si la valeur d'écart entre le bord du film et le couvercle d'extrémité respecte une norme prédéfinie, comprenant :
en réponse à la détermination, sur la base de la première image de détection, que la valeur d'écart entre le bord du film et le couvercle d'extrémité respecte la norme prédéfinie et à la détermination, sur la base de la seconde image de détection, que la valeur d'écart entre le bord du film et le couvercle d'extrémité respecte la norme prédéfinie, la détermination que la valeur d'écart entre le bord du film et le couvercle d'extrémité respecte la norme prédéfinie.

3. Procédé de détection selon la revendication 1, la détermination (S230), sur la base de l'image de détection, si la valeur d'écart entre le bord du film et le couvercle d'extrémité respecte une norme prédéfinie, comprenant :
l'identification, à partir de l'image de détection, d'une première ligne de bord du couvercle d'extrémité et d'une seconde ligne de bord du film proche de la première ligne de bord ; et
en réponse à la non-détection de la seconde ligne de bord dans l'image de détection, la détermination que la valeur d'écart entre le bord du film et le couvercle d'extrémité ne respecte pas la norme prédéfinie.

4. Procédé de détection selon la revendication 3, la détermination (S230), sur la base de l'image de détection, si la valeur d'écart entre le bord du film et le couvercle d'extrémité respecte une norme prédéfinie, comprenant en outre :
en réponse à l'identification de la première ligne de bord du couvercle d'extrémité et de la seconde ligne de bord du film proche de la première ligne de bord, l'obtention d'une distance à partir d'au moins un point sur la première ligne de bord jusqu'à la seconde ligne de bord dans une direction prédéfinie, et l'utilisation de la distance comme valeur d'écart, la direction prédéfinie étant perpendiculaire à une surface du couvercle d'extrémité proche de la cellule ; et
la détermination, sur la base d'au moins une valeur d'écart correspondant à l'au moins un point, si la valeur d'écart entre le bord du film et le couvercle d'extrémité respecte la norme prédéfinie.

5. Procédé de détection selon la revendication 4, la détermination, sur la base d'au moins une valeur d'écart correspondant à l'au moins un point, si la valeur d'écart entre le bord du film et le couvercle d'extrémité respecte la norme prédéfinie, comprenant :
en réponse au fait que l'au moins une valeur d'écart correspondant à l'au moins un point se trouve dans une plage prédéfinie, la détermination que la valeur d'écart entre le bord du film et le couvercle d'extrémité respecte la norme prédéfinie ;
et/ou
l'au moins un point comprenant au moins un point de division égale sur la première ligne de bord.

6. Procédé de détection selon la revendication 1, l'ajustement (S410) d'un écart entre le bord du film et le couvercle d'extrémité comprenant :
l'ajustement d'une position de revêtement du film sur la cellule sur la base de la valeur d'écart et d'une valeur d'écart standard entre le bord du film et le couvercle d'extrémité.

7. Système de détection (600) pour la production de batterie, une batterie comprenant une cellule (130) et un couvercle d'extrémité (110), et le système de détection (600) comprenant un appareil de détection (610), l'appareil de détection (610) comprenant :
une unité de prise de vue (611), configurée pour prendre une image de détection comprenant la cellule (130) revêtue d'un film (140) et le couvercle d'extrémité (110), la cellule (130) revêtue du film (140) étant connectée de manière fixe au couvercle d'extrémité (110) ;
une unité d'obtention (612), configurée pour obtenir une valeur d'écart entre un bord du film (140) et le couvercle d'extrémité (110) sur la base de l'image de détection ; et
une unité de traitement (613), configurée pour déterminer si la valeur d'écart entre le bord du film (140) et le couvercle d'extrémité (110) respecte une norme prédéfinie,
un appareil de réglage (620) en connexion de communication avec l'appareil de détection (610) et configuré pour : en réponse à la valeur d'écart ne respectant pas la norme prédéfinie, ajuster un écart entre le bord du film (140) et le couvercle d'extrémité (110) ; et
l'appareil de détection (610) étant en outre configuré pour détecter si la valeur d'écart ajustée entre le bord du film ajusté (140) et le couvercle d'extrémité (110) respecte la norme prédéfinie.

8. Système de détection (600) selon la revendication 7, la cellule (130) comprenant une surface supérieure (130A), une surface inférieure (130B), une première surface latérale (130C), et une seconde surface latérale (130D), la surface supérieure (130A) étant proche du couvercle d'extrémité (110) et opposée au couvercle d'extrémité (110), et la première surface latérale (130C) et la seconde surface latérale (130D) étant adjacentes l'une à l'autre et situées entre la surface supérieure (130A) et la surface inférieure (130B) ;
l'image de détection comprenant une première image de détection et une seconde image de détection, la première image de détection comprenant la première surface latérale (130C) de la cellule (130), et la seconde image de détection comprenant la seconde surface latérale (130D) de la cellule (130) ; et l'unité de traitement (613) étant en outre configurée pour :
en réponse à la détermination, sur la base de la première image de détection, que la valeur d'écart entre le bord du film (140) et le couvercle d'extrémité (110) respecte la norme prédéfinie et à la détermination, sur la base de la seconde image de détection, que la valeur d'écart entre le bord du film (140) et le couvercle d'extrémité (110) respecte la norme prédéfinie, déterminer que la valeur d'écart entre le bord du film (140) et le couvercle d'extrémité (110) respecte la norme prédéfinie.

9. Système de détection (600) selon la revendication 7, comprenant en outre :
une unité de détection (614), configurée pour : détecter, à partir de l'image de détection, une première ligne de bord (110A) du couvercle d'extrémité (110) et une seconde ligne de bord (140A) du film (140) proche de la première ligne de bord (110A) ; et
en réponse à la non-détection de la seconde ligne de bord (140A) dans l'image de détection, déterminer que la valeur d'écart entre le bord du film (140) et le couvercle d'extrémité (110) ne respecte pas la norme prédéfinie.

10. Système de détection (600) selon la revendication 9, l'unité de traitement (613) étant en outre configurée pour :
en réponse à l'identification de la première ligne de bord (110A) du couvercle d'extrémité (110) et de la seconde ligne de bord (140A) du film (140) proche de la première ligne de bord (110A), obtenir une distance (dn) à partir d'au moins un point sur la première ligne de bord (110A) jusqu'à la seconde ligne de bord (140A) dans une direction prédéfinie, et utiliser la distance (dn) comme valeur d'écart, la direction prédéfinie étant perpendiculaire à une surface (130B) du couvercle d'extrémité (110) proche de la cellule (130) ; et
déterminer, sur la base d'au moins une valeur d'écart correspondant à l'au moins un point, si la valeur d'écart entre le bord du film (140) et le couvercle d'extrémité (110) respecte la norme prédéfinie.

11. Système de détection (600) selon la revendication 10, l'unité de traitement (613) étant en outre configurée pour :
en réponse au fait que l'au moins une valeur d'écart correspondant à l'au moins un point se trouve dans une plage prédéfinie, déterminer que la valeur d'écart entre le bord du film (140) et le couvercle d'extrémité (110) respecte la norme prédéfinie.

12. Système de détection (600) selon l'une quelconque des revendications 7 à 11, l'appareil de détection (610) comprenant une pluralité d'unités de prise de vue (611) ;
ou
l'unité de prise de vue (611) étant une caméra CCD .

13. Système de détection (600) selon l'une quelconque des revendications 7 à 12, l'appareil de réglage (620) étant en outre configuré pour ajuster une position de revêtement du film (140) sur la cellule (130) sur la base de la valeur d'écart et d'une valeur d'écart standard entre le bord du film (140) et le couvercle d'extrémité (110).

14. Procédé de production de batterie, le procédé de production comprenant :
la détermination, à l'aide du procédé de détection selon l'une quelconque des revendications 1 à 6, si une valeur d'écart entre un bord d'un film appliqué sur une cellule et un couvercle d'extrémité respecte une norme prédéfinie ; et
en réponse à la détermination que la valeur d'écart entre le bord du film et le couvercle d'extrémité respecte la norme prédéfinie, la réalisation d'un traitement de thermofusion sur le film et le couvercle d'extrémité ;
de préférence,
lors de l'ajustement d'un écart entre le bord du film et le couvercle d'extrémité en réponse à la valeur d'écart ne respectant pas la norme prédéfinie, le procédé de production comprenant en outre :
en réponse au fait que la valeur d'écart ajustée entre le bord du film ajusté et le couvercle d'extrémité respecte la norme prédéfinie, la réalisation d'un traitement de thermofusion sur le film ajusté et le couvercle d'extrémité ;
plus préférablement,
le procédé de production comprenant en outre :
en réponse à la valeur d'écart ajustée ne respectant pas la norme prédéfinie, le retrait de la cellule revêtue du film et du couvercle d'extrémité d'une ligne de production.

15. Système de production (900) de batterie, le système de production (900) comprenant :
le système de détection (600) selon l'une quelconque des revendications 7 à 13, configuré pour déterminer si une valeur d'écart entre un bord d'un film (140) appliqué sur une cellule (130) et un couvercle d'extrémité (110) respecte une norme prédéfinie ; et
un appareil de thermofusion (910) en connexion de communication avec un appareil de détection (610) et configuré pour : en réponse à la détermination que la valeur d'écart entre le bord du film (140) et le couvercle d'extrémité (110) respecte la norme prédéfinie, réaliser un traitement de thermofusion sur le film (140) et le couvercle d'extrémité (110) ;
de préférence,
lorsque le système de détection (600) comprend un appareil de réglage (620), l'appareil de thermofusion (910) étant en outre configuré pour :
en réponse au fait que la valeur d'écart ajustée entre le bord du film ajusté (140) et le couvercle d'extrémité (110) respecte la norme prédéfinie, réaliser un traitement de thermofusion sur le film ajusté (140) et le couvercle d'extrémité (110) ;
plus préférablement,
comprenant en outre :
un appareil de transport (920) en connexion de communication avec l'appareil de détection (610) et configuré pour : en réponse à la valeur d'écart ajustée ne respectant pas la norme prédéfinie, retirer la cellule (130) revêtue du film (140) et le couvercle d'extrémité (110) d'une ligne de production.

16. Dispositif électronique, comprenant :
au moins un processeur ; et
une mémoire en connexion de communication avec l'au moins un processeur,
un programme informatique étant stocké dans la mémoire, et lorsque le programme informatique est exécuté par l'au moins un processeur, le procédé de détection selon l'une quelconque des revendications 1 à 6 ou le procédé de production selon la revendication 14 étant mis en œuvre.
